# EUROPEAN PATENT APPLICATION

(11) **EP 4 651 337 A1**
(43) Date of publication of application: **19.11.2025**
(21) Application number: 24880177.1
(22) Date of filing: 18.10.2024
(51) Int. Cl.: H02J 7/00, H01M 10/44

(54) **BATTERY CONTROL DEVICE AND METHOD**

(30) Priority: 20.10.2023 KR 20230140958; 18.04.2024 KR 20240052075
(71) Applicant: LG Energy Solution, Ltd., Seoul 07335 (KR)
(72) Inventor: HEO, Eun, Daejeon 34122 (KR); AHN, Ji-Hoon, Daejeon 34122 (KR)
(74) Representative: Goddar, Heinz J.
(86) International application number: PCT/KR2024/015866
(87) International publication number: WO 2025/084840

(57) **Abstract**

A battery control device includes: a connector turning ON or OFF a connection state between a plurality of batteries and an output terminal to which a discharge current is output, for each battery; a controller controlling the connector such that the plurality of batteries are connected in parallel with each other to the output terminal and discharged during a first discharge period from a start time of discharge of the plurality of batteries each of which SOC is a predetermined reference value or more until a time when the SOC of at least one of the plurality of batteries reaches the reference value, and connected alternatively to the output terminal and discharged during a second discharge period from a time when the SOC of each of the plurality of batteries becomes lower than the reference value until a time when the discharge of the plurality of batteries is terminated.

## Description

### TECHNICAL FIELD

This application is based on and claims priority from Korean Patent Application No. 10-2023-0140958, filed on October 20, 2023, and Korean Patent Application No. 10-2024-0052075, filed on April 18, 2024, with the Korean Intellectual Property Office, the disclosure of which is incorporated herein in its entirety by reference.

The present disclosure relates to a battery control device and method, in particular, a battery control device and method, which control a plurality of batteries that are individually rechargeable.

### BACKGROUND ART

In general, secondary batteries refer to batteries that can be charged and discharged repeatedly. A battery cell is the most basic secondary battery, and may provide an output voltage of about 2.5 V to 4.2 V.

Typical examples of secondary batteries that have been developed to date include lithium-sulfur batteries, in addition to lithium-ion batteries, lithium-polymer batteries, nickel-cadmium batteries, nickel-hydrogen batteries, and nickel-zinc batteries. Especially, the lithium-sulfur batteries have the advantages of storing a large amount of energy per unit weight, being manufactured at low costs and having a high safety, as compared to other types of batteries.

In recent years, the secondary batteries have been applied to apparatuses requiring a high output voltage and a large electrical capacity, such as electric vehicles, aircraft, ship, and energy storage systems (ESSs), which leads to the wide use of battery modules, in which a plurality of battery cells is connected in series and/or parallel with each other, or battery packs, in which a plurality of battery cells or a plurality of battery modules is connected in series and/or parallel with each other.

However, in conventional technologies, in order to ensure the large amount of electrical capacity, all of the plurality of individually rechargeable batteries are charged, and thereafter, the charged batteries are continuously discharged one by one, until each battery is completely discharged. Hence, the conventional technologies have the problems of degrading the discharge performance of batteries such as lithium-sulfur batteries that self-discharge rapidly when being left idle in a high SOC state, and increasing errors of SOC values estimated in association with the batteries.

### DISCLOSURE

### Technical Problem

An embodiment of the present disclosure provides a battery control device and method, which prevent the degradation in performance of batteries that self-discharge rapidly when being left idle in the high SOC state, and decrease errors of SOC values estimated in association with the batteries.

Another embodiment of the present disclosure provides a battery control device and method, which improve the discharge capacity per unit weight of a battery system including a plurality of batteries, and the energy density.

Yet another embodiment of the present disclosure provides a battery system and a transportation means, which include the battery control device according to the present disclosure.

### Technical Solution

According to an aspect of the present disclosure, a battery control device for controlling a discharge of a plurality of batteries includes: a connector configured to turn ON or OFF a connection between the plurality of batteries and an output terminal to which a discharge current is output, for each of the plurality of batteries; a controller configured to control the connector such that the plurality of batteries are connected in parallel with each other to the output terminal and discharged during a first discharge period from a start time of discharge of the plurality of batteries each of which state of charge (SOC) is equal to or more than a predetermined reference value until a time when the SOC of at least one of the plurality of batteries reaches the reference value, and connected alternatively to the output terminal and discharged during a second discharge period from a time when the SOC of each of the plurality of batteries becomes lower than the reference value until a time when the discharge of the plurality of batteries is terminated.

In an embodiment, the connector may include a plurality of switches corresponding to the plurality of batteries, respectively.

In an embodiment, the controller may be configured to discharge each of the plurality of batteries at a first current rate during the first discharge period, and discharge a battery connected to the output terminal among the plurality of batteries at a second current rate higher than the first current rate during the second discharge period.

In an embodiment, the controller may be configured to switch batteries disconnected from the output terminal among the plurality of batteries to enter an idle state, during the second discharge period.

In an embodiment, the controller may be configured such that during the second discharge period, when a connection time of a first battery connected to the output terminal exceeds a predetermined reference time, a second battery selected from remaining batteries other than the first battery among the plurality of batteries is connected to the output terminal, and the connection of the first battery is turned OFF.

In an embodiment, the second battery may be a battery with a highest voltage among the remaining batteries.

In an embodiment, the second battery may be a battery that has been disconnected from the output terminal for a longest time period among the remaining batteries.

In an embodiment, the controller may include: a data acquisition module configured to acquire data on electrical characteristic values of the plurality of batteries using at least one electric sensor; a SOC information generation module configured to generate SOC information indicating a SOC value of each of the plurality of batteries using the data; and a connection control module configured to control the connector according to SOC values of the plurality of batteries indicated in the SOC information.

In an embodiment, the plurality of batteries may include at least one lithium-sulfur battery.

According to another aspect of the present disclosure, a battery system includes the battery control device described above.

According to yet another aspect of the present disclosure, a transportation means includes the battery control device described above.

According to still yet another aspect of the present disclosure, a battery control method for controlling a discharge of a plurality of batteries includes: a first discharge step in which the plurality of batteries are connected in parallel with each other to the output terminal and discharged during a first discharge period from a start time of discharge of the plurality of batteries each of which state of charge (SOC) is equal to or more than a predetermined reference value until a time when the SOC of at least one of the plurality of batteries reaches the reference value; and a second discharge step in which the plurality of batteries are connected alternatively to the output terminal and discharged during a second discharge period from a time when the SOC of each of the plurality of batteries becomes lower than the reference value until a time when the discharge of the plurality of batteries is terminated.

In an embodiment, in the first discharge step, each of the plurality of batteries may be discharged at a first current rate, and in the second discharge step, a battery connected to the output terminal among the plurality of batteries may be discharged at a second current rate higher than the first current rate during the second discharge period.

In an embodiment, in the second discharge step, batteries disconnected from the output terminal among the plurality of batteries may be switched to enter an idle state.

In an embodiment, in the second discharge step, when a connection time of a first battery connected to the output terminal exceeds a predetermined reference time, a second battery selected from remaining batteries other than the first battery among the plurality of batteries may be connected to the output terminal, and the connection of the first battery may be turned OFF.

### Effect of the Invention

In the present disclosure, during the first discharge period when the SOC of each of the plurality of batteries is equal to or more than the predetermined reference value, the plurality of batteries are connected in parallel with each other to the output terminal and discharged all together, so that it is possible to prevent the degradation in performance of the batteries that self-discharge rapidly when being left idle in the high SOC state, and decrease errors of SOC values estimated in association with the batteries.

Further, in the present disclosure, during the second discharge period when the SOC of each of the plurality of batteries becomes lower than the reference value, the plurality of batteries are connected alternately to the output terminal and discharged, so that each battery is not continuously discharged after the elapse of the predetermined reference time. Therefore, it is possible to improve the discharge capacity per unit weight, the energy density, and the Coulombic efficiency of a battery system including the plurality of batteries, and prevent accidents caused from overheating.

Further, in the present disclosure, a control is performed to suppress the increase in voltage difference among the plurality of batteries during the discharge of the plurality of batteries, so that it is possible to prevent the inrush current occurring at the moment of connecting the batteries having a large voltage difference in parallel with each other. As a result, damages to the batteries may be prevented, the safety may be improved, and the plurality of batteries may be charged simultaneously, which may reduce the charging time.

Further, in the present disclosure, the lithium-sulfur batteries may be applied to a battery system requiring a high capacity, so that the energy density and the safety of the battery system may be improved, and the manufacturing costs may be reduced.

From the descriptions herein below, one of ordinary skill in the art to which the present disclosure belongs may obviously understand that various embodiments of the present disclosure may solve other technical problems that are not described above.

### DESCRIPTION OF DRAWINGS

FIG. 1 is a block diagram illustrating a battery control device according to an embodiment of the present disclosure.
FIG. 2 is a diagram illustrating a first connection state between a plurality of batteries and an output terminal.
FIG. 3 is a diagram illustrating a second connection state between a plurality of batteries and an output terminal.
FIG. 4 is a diagram illustrating a third connection state between a plurality of batteries and an output terminal.
FIG. 5 is a timing diagram illustrating a discharge sequence of a plurality of batteries.
FIG. 6 is a flowchart illustrating a battery control method according to an embodiment of the present disclosure.
FIG. 7 is a flowchart illustrating a battery connection process of a battery control method according to an embodiment of the present disclosure.
FIG. 8 is a graph illustrating a change in discharge capacity per unit weight according to an increase in the number of times of charge/discharge cycles for lithium-sulfur batteries discharged at different current rates.
FIG. 9 is a graph illustrating a change in energy density according to an increase in the number of times of charge/discharge cycles for lithium-sulfur batteries discharged at different current rates.
FIG. 10 is a graph illustrating a change in Coulombic efficiency according to an increase in the number of times of charge/discharge cycles for lithium-sulfur batteries discharged at different current rates.
FIG. 11 is a graph illustrating a change in discharge capacity per unit weight according to an increase in the number of times of charge/discharge cycles for lithium-sulfur batteries discharged by different methods.
FIG. 12 is a graph illustrating a change in energy density according to an increase in the number of times of charge/discharge cycles for lithium-sulfur batteries discharged by different methods.
FIG. 13 is a graph illustrating a change in Coulombic efficiency according to an increase in the number of times of charge/discharge cycles for lithium-sulfur batteries discharged by different methods.
FIG. 14 is a view illustrating a battery system according to an embodiment of the present disclosure.
FIG. 15 is a view illustrating a transportation means according to an embodiment of the present disclosure.

### Detailed Description to Execute the Invention

Hereinafter, embodiments of the present disclosure are described in detail with reference to the accompanying drawings to clearly describe the technology of the present disclosure. In describing the present disclosure, descriptions of related well-known art may be omitted if they would obscure the gist of present disclosure. Further, terms used herein are defined in consideration of their functions in the present disclosure, and may vary according to the intent or conventions of designers, manufacturers, and other. Therefore, terms to be described herein below should be defined based on the entire descriptions herein.

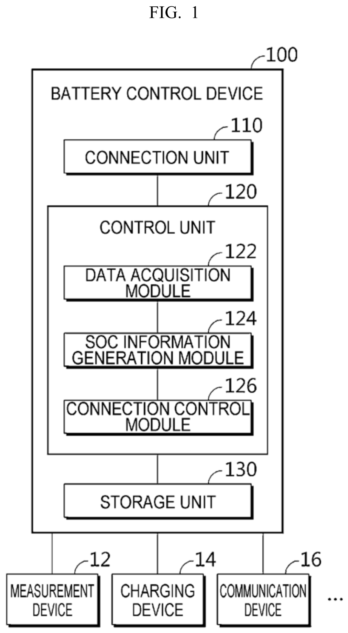

FIG. 1 is a block diagram illustrating a battery control device 100 according to an embodiment of the present disclosure.

As illustrated in FIG. 1, the battery control device 100 according to an embodiment of the present disclosure includes a connection unit 110 and a control unit 120, and is configured to control at least the discharge of a plurality of batteries.

Each of the plurality of batteries controlled by the battery control device 100 according to the present disclosure may be implemented as a battery cell, which is the most basic secondary battery, a battery module including a plurality of battery cells connected in series and/or parallel with each other, or a battery pack including a plurality of battery cells or a plurality of battery modules connected in series and/or parallel with each other.

Further, the plurality of batteries may include at least one lithium-sulfur battery. The lithium-sulfur battery is a battery in which a first active material including sulfur is applied to a positive electrode, and a second active material including lithium is applied to a negative electrode. The lithium-sulfur battery has the advantages of storing a large amount of energy per unit weight, being manufactured at low costs, and having a high safety, as compared to other types of batteries.

The connection unit 110 is configured to turn ON or OFF the connection between the plurality of batteries and an output terminal to which a discharge current is output, for each battery.

In an embodiment, the connection unit 110 may include a plurality of switches corresponding to the plurality of batteries, respectively. In this case, each switch may be configured to electrically connect or disconnect a corresponding battery among the plurality of batteries and the output terminal to/from each other.

Each of the plurality of switches included in the connection unit 110 may be implemented in various forms or structures according to the output of the corresponding battery. For example, each of the plurality of switches may be implemented as a relay or a switching semiconductor element.

The control unit 120 is configured to control the connection unit 110. That is, the control unit 120 may control the connection unit 110 such that at least one of the plurality of batteries is connected to the output terminal and discharged.

In particular, the control unit 120 may control the connection unit 110 such that the plurality of batteries are connected in parallel with each other to the output terminal and discharged all together, during a first discharge period from the start time of the discharge of the plurality of batteries each of which state of charge (SOC) is equal to or more than a predetermined reference value until the time when the SOC of at least one of the plurality of batteries reaches the reference value.

Further, the control unit 120 may control the connection unit 110 such that the plurality of batteries are alternately connected to the output terminals and discharged, during a second discharge period from the time when the SOC of each of the plurality of batteries becomes lower than the reference value until the time when the discharge of the plurality of batteries is terminated.

In this case, the reference value may be determined in consideration of the self-discharge rates of the batteries to be controlled by the battery control device 100 of the present disclosure according to the SOCs. For example, when the batteries to be controlled are batteries such as lithium-sulfur batteries that self-discharge rapidly in the state where the SOC is 75 % or more, and exhibit a sharply decreasing self-discharge rate in the state where the SOC is less than 75 %, the reference value may be determined to be 75 %.

Further, the control unit 120 may be configured such that among the plurality of batteries, the batteries disconnected from the output terminal during the second discharge period are switched to enter an idle state.

Further, the control unit 120 may be configured such that when the connection time of a first battery connected to the output terminal exceeds a predetermined reference time during the second discharge period, a second battery selected from the remaining batteries other than the first battery among the plurality of batteries is connected to the output terminal, and the connection of the first battery is turned OFF. The reference time may be determined to be time during which the voltage difference among the batteries due to the discharge of any one of the plurality of batteries does not exceed a predetermined threshold value (e.g., 10 V).

In this case, the second battery may be the battery with the highest voltage among the remaining batteries. That is, the control unit 120 may select the second battery with the highest voltage among the remaining batteries as a battery to be discharged subsequent to the first battery.

In another embodiment, the second battery may be the battery that has not been connected to the output terminal for the longest time period among the remaining batteries. That is, the control unit 120 may select the second battery that has not been connected to the output terminal for the longest time period among the remaining batteries as a battery to be discharged subsequent to the first battery.

In this way, the present disclosure may perform a control to suppress the increase in voltage difference among the plurality of batteries during the discharge of the plurality of batteries, thereby preventing the occurrence of inrush current at the moment of connecting the batteries with a large voltage difference in parallel with each other. As a result, the damage to the batteries may be prevented, the safety may be improved, and the plurality of batteries may be charged simultaneously, so that the charging time may be reduced.

Meanwhile, the control unit 120 may control the connection unit 110 as described above to discharge each of the plurality of batteries at a first current rate during the first discharge period, and discharge the battery connected to the output terminal among the plurality of batteries at a second current rate higher than the first current rate during the second discharge period.

In another embodiment, the control unit 120 may regulate the current rates of the plurality of batteries by adjusting the duty ratio of the discharge current being discharged from each of the plurality of batteries, or by controlling the output of an electrical device using the discharge current.

As described above, in the present disclosure, the plurality of batteries are connected in parallel with each other to the output terminal and discharged all together during the first discharge period when the SOC of each of the plurality of batteries is equal to or more than the predetermined reference value. Therefore, it is possible to prevent the battery performance degradation caused from the self-discharge of the batteries that self-discharge rapidly when being left idle in the high SOC state, and may decrease errors of SOC values estimated in association with the batteries.

Further, in the present disclosure, the plurality of batteries are alternately connected to the output terminal and discharged during the second discharge period when the SOC of each of the plurality of batteries becomes lower than the reference value, so that each battery is prevented from being continuously discharged after the elapse of the predetermined reference time. Therefore, the discharge capacity per unit weight, the energy density, and the Coulombic efficiency of a battery system including the plurality of batteries may be improved, and accidents caused from overheating may be prevented.

Thus, the present disclosure may solve the problem of lithium-sulfur batteries that exhibit the high self-discharge rate in the high SOC state and have the relatively low discharge current as compared to other types of batteries, and may expand the application fields of the lithium-sulfur batteries.

In an embodiment, the control unit 120 may include a data acquisition module 122, a SOC information generation module 124, and a connection control module 126.

The data acquisition module 122 may be configured to acquire data on electrical characteristic values of the plurality of batteries by using at least one electric sensor. In this case, the electrical characteristic values may include voltage values and current values of each of the plurality of batteries.

The SOC information generation module 124 may be configured to generate SOC information indicating a SOC value of each of the plurality of batteries, using the data acquired by the data acquisition module 122. For example, the SOC information generation module 124 may generate the SOC information using a SOC-OCV profile representing the association between the state of charge (SOC) and the open circuit voltage (OCV) of each of the batteries, or using a current integration method.

The connection control module 126 may be configured to control the connection unit 110 based on the SOC values of the plurality of batteries indicated in the SOC information.

The connection control module 126 may control the connection unit 110 such that during the first discharge period when the SOCs of all of the plurality of batteries are equal to or more than the predetermined reference value in the entire discharge period of the plurality of batteries, the plurality of batteries are connected in parallel with each other to the output terminal and discharged all together. For example, during the period when the SOC of each of the plurality of batteries decreases from 100 % to 75 %, the connection control module 126 may connect the plurality of batteries in parallel with each other to the output terminal.

Then, the connection control module 126 may control the connection unit 110 such that during the second discharge period when the SOC of each of the plurality of batteries becomes lower than the reference value, the plurality of batteries are alternately connected to the output terminal and discharged.

For example, when the discharge of the plurality of batteries is progressed so that the SOCs of all of the plurality of batteries become lower than 75 %, the connection control module 126 may disconnect the parallel connection of the plurality of batteries, and connect the plurality of batteries alternately to the output terminal.

Meanwhile, when the plurality of batteries are discharged simultaneously during the first discharge period, but the SOC of only a portion of the plurality of batteries becomes lower than the reference value, while the SOCs of the remaining batteries are still equal to or more than the reference value, the control unit 120 may maintain the parallel connection of the plurality of batteries to the output terminal until the SOCs of all of the plurality of batteries become lower than the reference value.

In another embodiment, the control unit 120 may be configured such that when the plurality of batteries are discharged simultaneously during the first discharge period, but the SOC of only a portion of the plurality of batteries becomes lower than the reference value, while the SOCs of the remaining batteries are still equal to or more than the reference value, the connection between the portion of the plurality of batteries and the output terminal is turned OFF to switch the portion of the plurality of batteries to enter the idle state, and the connection between the remaining batteries and the output terminal is maintained.

The control unit 120 described above may include one, or two or more general processors or application-specific integrated circuits (ASICs) to execute a battery control logic, and may further include hardware components such as registers and memories according to an embodiment. The control unit 120 may be implemented as a combination of a hardware component such as a processor and a software component such as a computing program. That is, the battery control logic of the connection unit 110 may be implemented as a computing program, which may be stored in the own memory of the control unit 120 or in a storage unit 130 to be described herein later, and executed through the hardware component of the control unit 120.

In an embodiment, the battery control device 100 may further include the storage unit 130. The storage unit 130 may be configured to store and manage data necessary for the operation of the battery control device 100. To this end, the storage unit 130 may include one, or two or more of a ROM, a RAM, an EEPROM, a register, a flash memory, a CD-ROM, a magnetic tape, a hard disk, a floppy disk, and an optical data recorder.

In an embodiment, the battery control device 100 may be configured to operate in cooperation with, for example, a measurement device 12 including at least one electric sensor that measures a voltage, charge current, and/or discharge current of each of the plurality of batteries, a charging device 14 that charges the plurality of batteries, a communication device 16 that communicates with other devices.

In another embodiment, the battery control device 100 according to the present disclosure may include at least one of the measurement device 12, the charging device 14, and the communication device 16 described above.

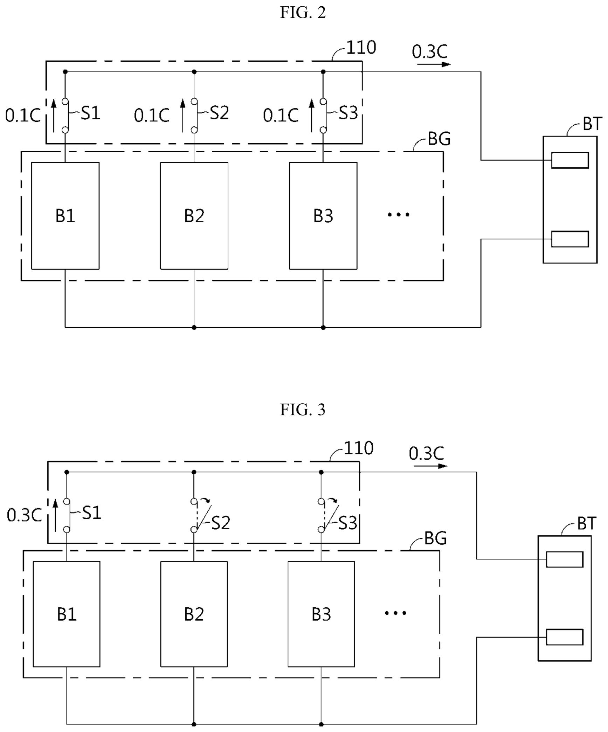

FIG. 2 is a view illustrating a first connection state between the plurality of batteries and the output terminal.

As illustrated in FIG. 2, the connection unit 110 of the battery control device according to the present disclosure is configured to turn ON or OFF the connection between a battery group BG including a plurality of batteries B1 to B3 and an output terminal BT to which the discharge current is output, for each battery. To this end, the connection unit 110 may include a plurality of switches S1 to S3 corresponding to the plurality of batteries B1 to B3, respectively.

As described above, each of the plurality of switches S1 to S3 may be implemented in various forms or structures according to the output of the corresponding battery. For example, when each of the plurality of batteries B1 to B3 is configured with a battery module or a battery pack including a plurality of battery cells connected in series and/or parallel with each other, each of the plurality of switches S1 to S3 may be implemented as a relay.

During the first discharge period from the start time of the discharge of the plurality of batteries B1 to B3 until the time when the SOC of at least one of the plurality of batteries reaches the reference value (e.g., 75 %), the control unit 120 may turn ON all of the plurality of switches S1 to S3, such that the plurality of batteries B1 to B3 are connected in parallel with each other to the output terminal BT and discharged all together.

In this case, each of the plurality of batteries B1 to B3 may be discharged at the first current rate. For example, each battery may be discharged at a current rate of 0.1 [C], so that a total discharge current of 0.3 [C] may be output to the output terminal BT.

FIG. 3 is a view illustrating the second connection state between the plurality of batteries and the output terminal.

As illustrated in FIG. 3, during the second discharge period from the time when the SOCs of all of the plurality of batteries B1 to B3 become lower than the reference value until the time when the discharge of the plurality of batteries is terminated, the control unit 120 may control the connection unit 110, such that the plurality of batteries are connected alternately to the output terminal and discharged.

For example, the control unit 120 may maintain the connection state of the first switch S1 among the plurality of switches S1 to S3, and turn OFF the remaining switches S2 and S3, to connect only the first battery B1 among the plurality of batteries B1 to B3 to the output terminal BT.

In this case, the first battery B1 connected to the output terminal BT is discharged at the second current rate higher than the first current rate, and the remaining batteries B2 and B3 may be switched to enter the idle state. For example, the first battery B1 may be discharged at a current rate of 0.3 [C], so that a total discharge current of 0.3 [C] may be output to the output terminal BT.

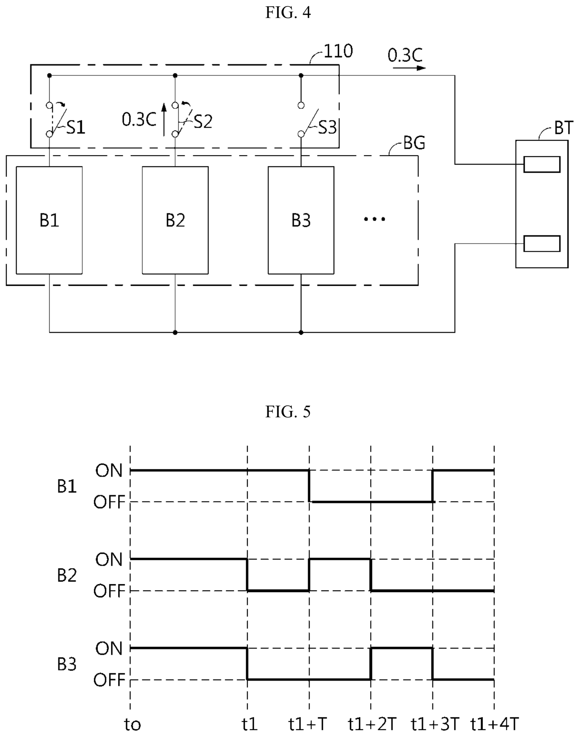

FIG. 4 is a view illustrating the third connection state between the plurality of batteries and the output terminal.

As illustrated in FIG. 4, when the connection time of the first battery B1 connected to the output terminal BT exceeds the predetermined reference time, the control unit 120 may connect a second battery B2 selected from the remaining batteries B2 and B3, other than the first battery B1, to the output terminal BT, and turn OFF the connection of the first battery B1.

In this case, the second battery B2 may be the battery with the highest voltage in the remaining batteries B2 and B3, or the battery that has not been connected to the output terminal BT for the longest time period, in the remaining batteries B2 and B3.

The control unit 120 may maintain the disconnection state of the third switch S3 among the plurality of switches S1 to S3, turn ON the second switch S2, and turn OFF the first switch S1, so that only the second battery B2 among the plurality of batteries B1 to B3 may be connected to the output terminal BT.

In this case, the second battery B2 connected to the output terminal BT may be discharged at the second current rate higher than the first current rate, the first battery B1 may be switched to enter the idle state, and the third battery B3 may remain in the idle state. For example, the second battery B2 may be discharged at a current rate of 0.3 [C], so that a total discharge current of 0.3 [C] is output to the output terminal BT.

FIG. 5 is a timing diagram illustrating the discharge sequence of the plurality of batteries.

As illustrated in FIG. 5, the plurality of batteries B1 to B3 controlled according to the present disclosure are discharged all together during a first discharge period tl-to of an entire discharge period.

The plurality of batteries B1 to B3 are alternately discharged after the first discharge period tl-to. In this case, each battery may undergo the discharge and the idle state repeatedly until the end time of the discharge. For example, each battery may repeatedly undergo the discharge for time T and the idle state for time 2T.

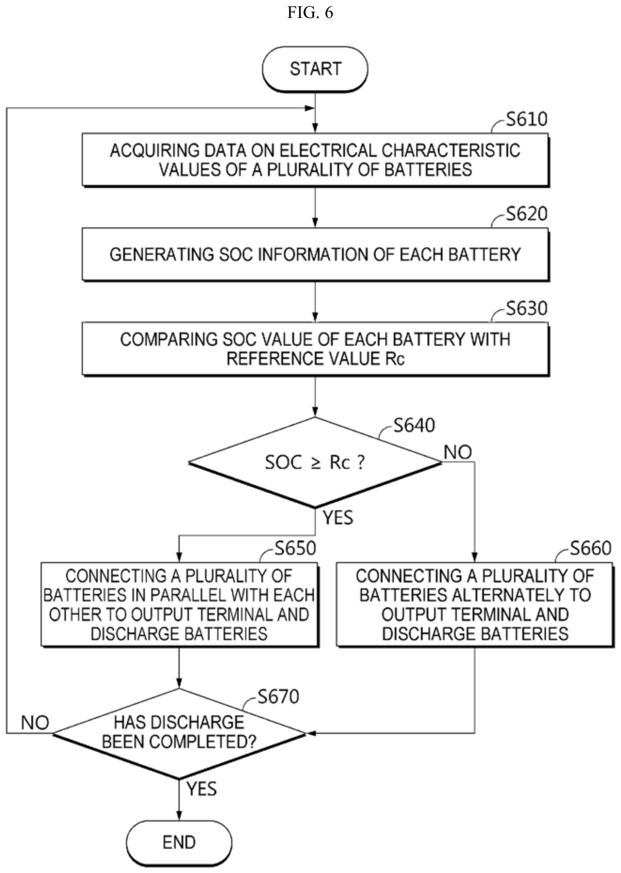

FIG. 6 is a flowchart illustrating a battery control method according to an embodiment of the present disclosure.

As illustrated in FIG. 6, the battery control method according to the present disclosure is a method of controlling at least the discharge of the plurality of batteries, and includes a first discharge step and a second discharge step.

In the first discharge step, the plurality of batteries, each of which SOC is equal to or more than the predetermined reference value, are connected in parallel with each other to the output terminal and discharged all together during the first discharge period from the start time of the discharge until the time when the SOC of at least one of the plurality of batteries reaches the reference value (S610 to S650).

In the first discharge step, each of the plurality of batteries may be discharged at the first current rate.

Further, in the second discharge step, the plurality of batteries are connected alternately to the output terminal and discharged during the second discharge period from the time when the SOC of each of the plurality of batteries becomes lower than the reference value, until the time when the discharge of the plurality of batteries is terminated (S610 to S640, S660).

In the second discharge step, among the plurality of batteries, the battery connected to the output terminal may be discharged at the second current rate higher than the first current rate.

Further, in the second discharge step, among the plurality of batteries, the batteries disconnected from the output terminal may be switched to enter the idle state.

Further, in the second discharge step, when the connection time of the first battery connected to the output terminal exceeds the predetermined reference time, the second battery selected from the remaining batteries other than the first battery among the plurality of batteries is connected to the output terminal, and the connection of the first battery may be turned OFF.

In an embodiment, the plurality of batteries may include at least one lithium-sulfur battery.

More specifically, the data acquisition module 122 of the control unit 120 acquires the data on the electrical characteristic values of the plurality of batteries by using at least one electric sensor (S610). In this case, the electrical characteristic values may include voltage values and current values of each of the plurality of batteries.

Then, the SOC information generation module 124 of the control unit 120 generates the SOC information indicating the SOC value of each of the plurality of batteries by using the data acquired by the data acquisition module 122 (S620). For example, the SOC information generation module 124 may generate the SOC information using a SOC-OCV profile representing the association between the SOC and the OCV of each of the batteries, or using a current integration method.

As a result, the connection control module 126 of the control unit 120 may control the connection unit 110 according to the SOC values of the plurality of batteries represented in the SOC information.

That is, the connection control module 126 compares the SOC values of the plurality of batteries with a reference value Rc (S630).

As a result of the comparison between the SOC values of the plurality of batteries and the reference value Rc, when the SOCs of all of the plurality of batteries are equal to or more than the reference value Rc, the connection control module 126 discharges the plurality of batteries all together by connecting the batteries in parallel with each other to the output terminal (S640 and S650).

For example, when the reference value Rc is 75 %, and the SOCs of all of the plurality of batteries fall within the range of 100 % to 75 %, the connection control module 126 may connect the plurality of batteries in parallel with each other to the output terminal. In this case, each of the plurality of batteries may be discharged at the first current rate.

When the SOCs of all of the plurality of batteries become lower than the reference value Rc as the discharge of the plurality of batteries is progressed, the connection control module 126 connects the plurality of batteries alternately to the output terminal and discharges the batteries one by one.

For example, when the reference value Rc is 75 %, and the SOC of each of the plurality of batteries is lower than 75 %, the connection control module 126 may disconnect the parallel connection among the plurality of batteries, and connect the plurality of batteries alternately to the output terminal. In this case, among the plurality of batteries, the battery connected to the output terminal may be discharged at the second current rate higher than the first current rate.

Steps S610 to S660 described above may be repeated until the discharge of the plurality of batteries is completed (S670).

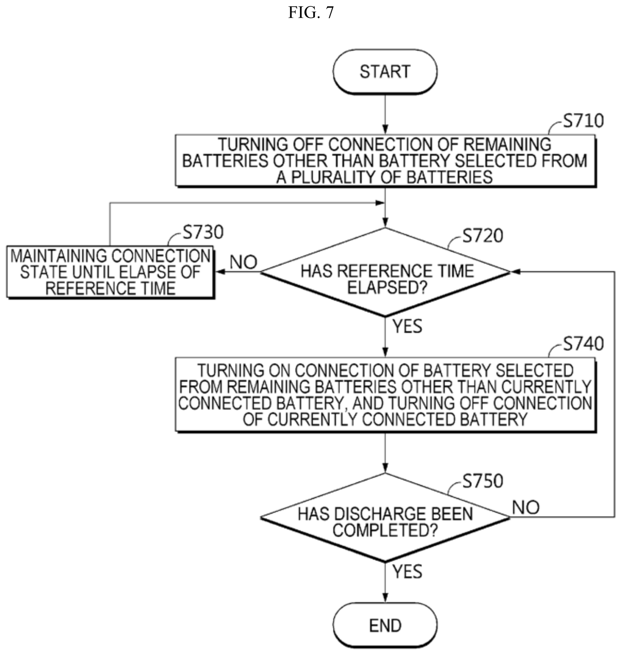

FIG. 7 is a flowchart illustrating the battery connection process of the battery control method according to an embodiment of the present disclosure.

As illustrated in FIG. 7, when the SOCs of all of the plurality of batteries become lower than the reference value Rc as the discharge of the plurality of batteries is progressed, the connection control module 126 of the connection unit 110 may connect the plurality of batteries alternately to the output terminal and discharge the batteries one by one.

Specifically, when the SOCs of all of the plurality of batteries become lower than the reference value Rc as the discharge of the plurality of batteries is progressed, the connection control module 126 turns OFF the connection of the remaining batteries other than the first battery selected from the plurality of batteries, to connect only the first battery among the plurality of batteries to the output terminal (S710).

In this case, the control unit 120 may maintain the connection state of the first battery until the predetermined reference time elapses (S720 and S730). Further, the remaining batteries may be maintained in the idle state during the reference time.

Then, when the connection time of the first battery connected to the output terminal exceeds the predetermined reference time, the connection control module 126 may connect the second battery selected from the remaining batteries other than the first battery to the output terminal, and turn OFF the connection of the first battery, to connect only the second battery among the plurality of batteries to the output terminal (S740).

In this case, the second battery may be the battery with the highest voltage among the remaining batteries, or the battery that has not been connected to the output terminal for the longest time period among the remaining batteries.

Steps S720 to S740 described above may be repeated until the discharge of the plurality of batteries is completed (S750).

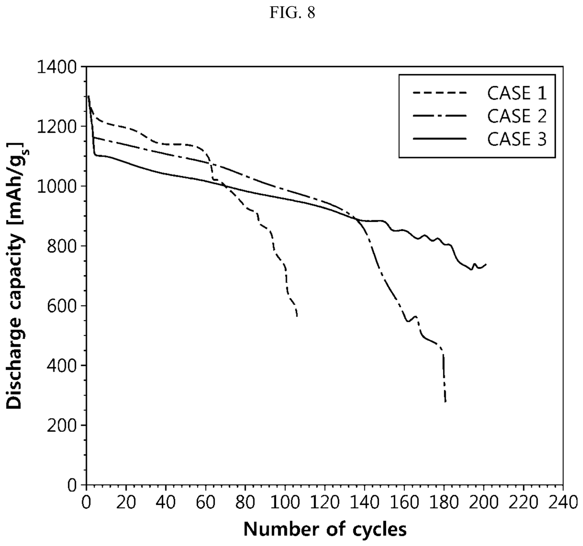

FIG. 8 is a graph illustrating the change in discharge capacity per unit weight according to the increase in number of times of charge and discharge cycles for lithium-sulfur batteries discharged at different current rates.

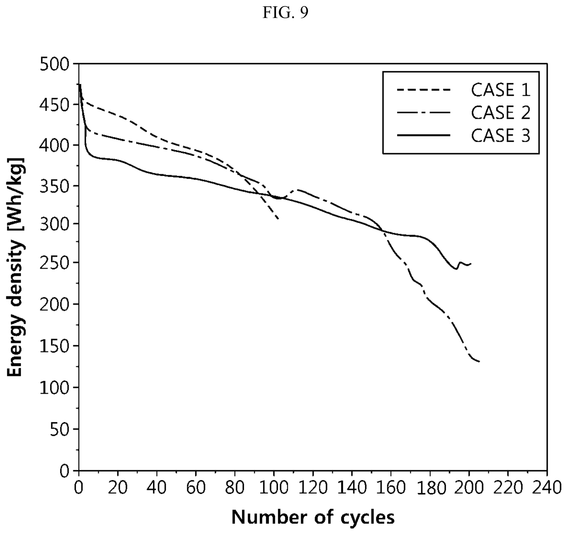

FIG. 9 is a graph illustrating the change in energy density according to the increase in number of times of charge and discharge cycles for lithium-sulfur batteries discharged at different current rates.

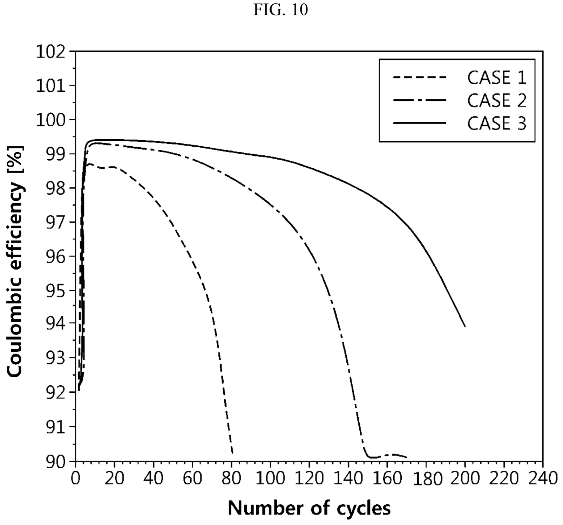

FIG. 10 is a graph illustrating the change in Coulombic efficiency according to the increase in number of times of charge and discharge cycles for lithium-sulfur batteries discharged at different current rates.

In FIGS. 8 to 10, "CASE 1" is a case of repeating a cycle of charging a lithium-sulfur battery at 0.2 [C] and discharging the same battery at 0.1 [C], "CASE 2" is a case of repeating a cycle of charging a lithium-sulfur battery at 0.2 [C] and discharging the same battery at 0.3 [C], and "CASE 3" is a case of repeating a cycle of charging a lithium-sulfur battery at 0.2 [C] and discharging the same battery at 0.5 [C].

As illustrated in FIGS. 8 to 10, it may be seen that when the current rate is the same during the charge, the discharge efficiency, the energy density, and the Coulombic efficiency of the lithium-sulfur battery change stably as the current rate is high during the discharge, despite that the number of times of cycles increases.

Thus, in the present disclosure, when the SOCs of the batteries to be discharged are relatively high, the batteries are discharged simultaneously at a relatively low current rate for self-discharge. Meanwhile, when the SOCs of the batteries to be discharged are relatively low, the batteries are discharged alternately at a relatively high current rate.

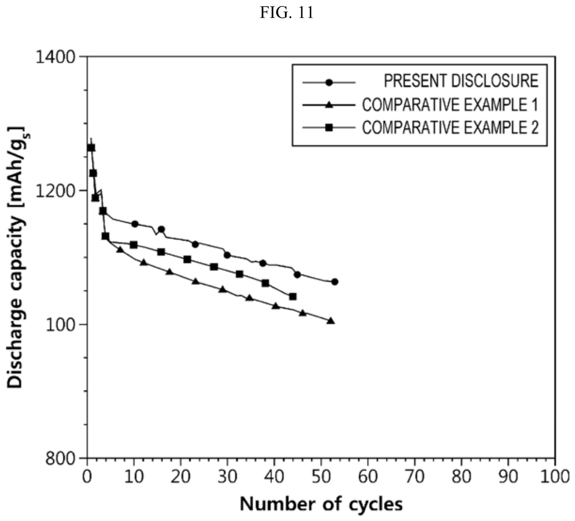

FIG. 11 is a graph illustrating the change in discharge capacity per unit weight according to the increase in number of times of charge/discharge cycles for lithium-sulfur batteries discharged by different methods.

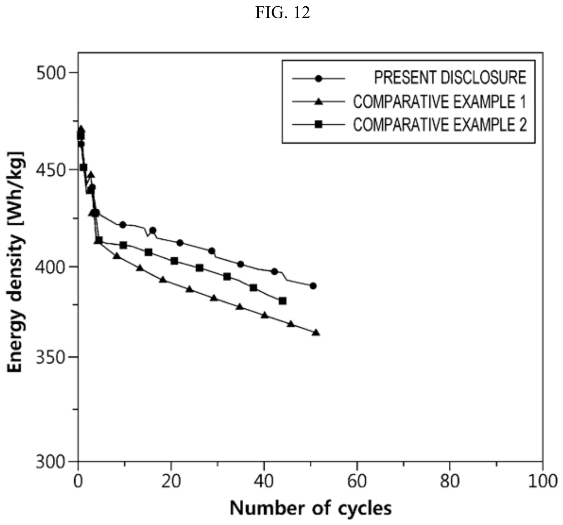

FIG. 12 is a graph illustrating the change in energy density according to the increase in number of times of charge/discharge cycles for lithium-sulfur batteries discharged by different methods.

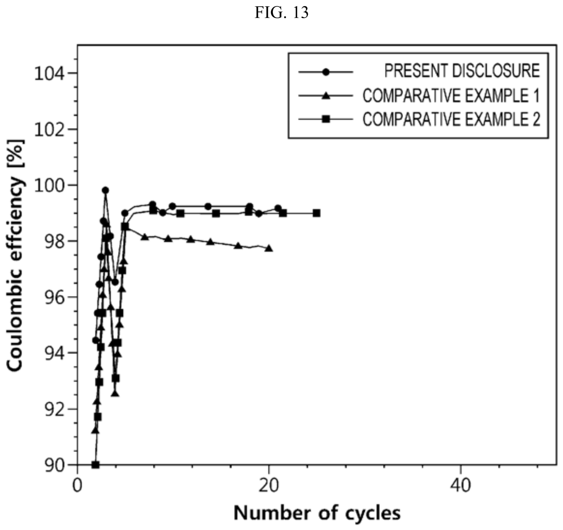

FIG. 13 is a graph illustrating the change in Coulombic efficiency according to the increase in number of times of charge/discharge cycles for lithium-sulfur batteries discharged by different methods.

In FIGS. 11 to 13, the "present disclosure" provides a method, in which when the SOC of each of the plurality of lithium-sulfur batteries is equal to or more than 75 %, the plurality of lithium-sulfur batteries are connected in parallel with each other and discharged simultaneously at 0.1 [C], and when the SOC of each of the plurality of lithium-sulfur batteries becomes lower than 75 %, the plurality of lithium-sulfur batteries are discharged alternately at 0.3 [C].

"Comparative Example 1" relates to a method of completely discharging a plurality of lithium-sulfur batteries one by one sequentially without considering the SOC.

"Comparative Example 2" relates to a method of connecting a plurality of lithium-sulfur batteries in parallel with each other and discharging the batteries simultaneously at 0.1 [C] when the SOC of each of the plurality of lithium-sulfur batteries is equal to or more than 75 %, and completely discharging the plurality of lithium-sulfur batteries one by one sequentially at 0.3 [C] when the SOC of each of the plurality of lithium-sulfur batteries becomes lower than 75 %.

As illustrating in FIGS. 11 to 13, it may be seen that the method according to the "present disclosure" may improve the discharge efficiency, the energy density, and the Coulombic efficiency of the lithium-sulfur batteries, as compared to the method according to Comparative Example 1 or 2.

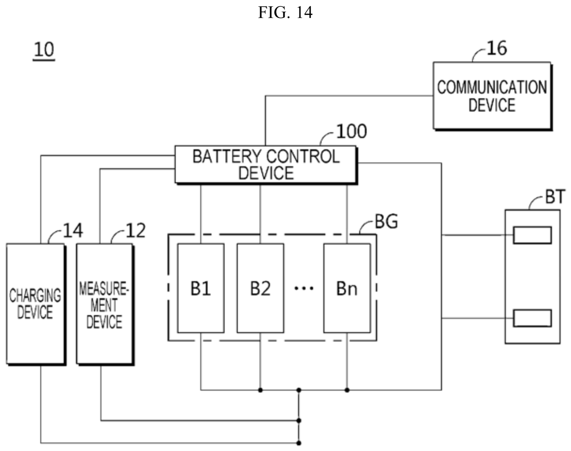

FIG. 14 is a view illustrating a battery system 10 according to an embodiment of the present disclosure.

As illustrating in FIG. 14, the battery system 10 may include the battery group BG including the plurality of batteries B1 to Bn that are individually rechargeable, the output terminal BT to which the discharge current of the battery group BG is output, and the battery control device 100 according to the present disclosure. In an embodiment, the battery system 10 may further include at least one of the measurement device 12, the charging device 14, and the communication device 16.

The measurement device 12 may be configured to measure the voltage, charge current and/or discharge current of the plurality of batteries B1 to Bn. To this end, the measurement device 12 may include at least one electric sensor.

For example, the measurement device 12 may include at least one voltage sensor that senses the voltage of the plurality of batteries B1 to Bn and/or at least one current sensor that senses the current of the plurality of batteries B1 to Bn.

The battery control device 100 according to an embodiment of the present disclosure may acquire voltage values of the plurality of batteries B1 to Bn via the measurement device 12.

The charging device 14 may be configured to charge the plurality of batteries B1 to Bn. In this case, the battery control device 100 according to an embodiment of the present disclosure may be configured to control the operation of the charging device 14, to proceed with or stop the charge of the plurality of batteries B1 to Bn or change the charge conditions.

The communication unit 16 may be configured to communicate with other devices, which are located remotely. For example, the communication unit 16 may be configured to receive data transmitted from a remote server or a communication terminal via a wired and/or wireless communication network and deliver the data to the battery control device 100, or to transmit data generated by the battery control device 100 to another server or communication terminal. To this end, the communication unit 16 may include a communication modem that performs a wired and/or wireless communication.

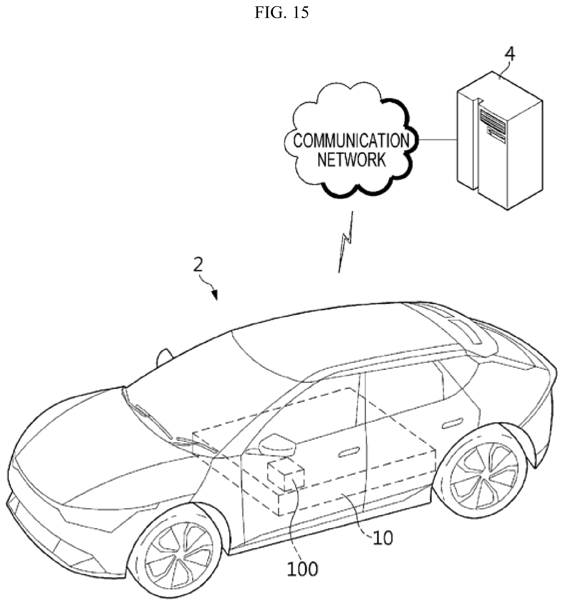

FIG. 15 is a view illustrating a transportation means 2, according to an embodiment of the present disclosure.

As illustrated in FIG. 15, the transportation means 2, according to an embodiment of the present disclosure, may include the battery system 10 that provides the electrical energy necessary for the operation of the transportation means 2, and the battery control device 100 according to the present disclosure.

In an embodiment, the battery control device 100 according to the present disclosure may be configured to operate in cooperation with or integrate with an electronic control unit (ECU) controlling the operation of the transportation means 2 or a battery management system (BMS) of the battery system 10.

Further, the battery control device 100 may be configured to receive the data transmitted from a remote server 4 via a wired and/or wireless communication network, or to transmit the data generated by the battery control device 100 to the server 4.

While FIG. 15 illustrates a vehicle as the transportation means 2 according to the present disclosure, the transportation means 2 according to the present disclosure may be implemented as an aircraft or ship.

For reference, the battery control device 100 according to the present disclosure may be applied to various electrical devices or systems, in addition to transportation means such as vehicles, aircraft, and ship, and may also be applied to an energy storage system (ESS).

As described above, in the present disclosure, during the first discharge period when the SOC of each of the plurality of batteries is equal to or more than the predetermined reference value, the plurality of batteries are connected in parallel with each other to the output terminal and discharged all together, so that it is possible to prevent the degradation in performance of the batteries that self-discharge rapidly when being left idle in the high SOC state, and decrease errors of SOC values estimated in association with the batteries.

Further, in the present disclosure, during the second discharge period when the SOC of each of the plurality of batteries becomes lower than the reference value, the plurality of batteries are connected alternately to the output terminal and discharged, so that each battery is not discharged continuously after the elapse of the predetermined reference time. Therefore, it is possible to improve the discharge capacity per unit weight, the energy density, and the Coulombic efficiency of the battery system including the plurality of batteries, and prevent accidents caused from overheating.

Further, in the present disclosure, a control is performed to suppress the increase in voltage difference among the plurality of batteries during the discharge of the plurality of batteries, so that it is possible to prevent the inrush current occurring at the moment of connecting the batteries having a large voltage difference in parallel with each other. As a result, damages to the batteries may be prevented, the safety may be improved, and furthermore, the plurality of batteries may be charged simultaneously, which may reduce the charging time.

Further, in the present disclosure, the lithium-sulfur batteries may be applied to a battery system requiring a high capacity, so that the energy density and the safety of the battery system may be improved, and the manufacturing costs may be reduced.

Further, the embodiments of the present disclosure may solve other various technical problems arising not only in the technical field to which the present disclosure belongs, but also in related technical fields, in addition to those described herein.

The technology of the present disclosure has been described with reference to specific embodiments. However, those skilled in the art may obviously understand that various modifications may be implemented within the technical scope of the present disclosure. Therefore, the foregoing embodiments should be considered from the descriptive viewpoint, rather than from the limiting viewpoint. That is, the essential scope of the technical idea of the present disclosure may be found in the claims attached herewith, and any differences that fall under the equivalent scope to the present disclosure should be construed as being included in the present disclosure.

### (Explanation of reference signs)

2: transportation means
10: battery system
100: battery control device
110: connection unit
120: control unit
122: data acquisition module
124: SOC information generation module
126: connection control module
130: storage unit

## Claims

1. A battery control device for controlling a discharge of a plurality of batteries, the battery control device comprising:
a connector configured to turn ON or OFF a connection between the plurality of batteries and an output terminal to which a discharge current is output, for each of the plurality of batteries;
a controller configured to control the connector such that the plurality of batteries are connected in parallel with each other to the output terminal and discharged during a first discharge period from a start time of discharge of the plurality of batteries each of which SOC is equal to or more than a predetermined reference value until a time when the SOC of at least one of the plurality of batteries reaches the reference value, and connected alternatively to the output terminal and discharged during a second discharge period from a time when the SOC of each of the plurality of batteries becomes lower than the reference value until a time when the discharge of the plurality of batteries is terminated.

2. The battery control device according to claim 1, wherein the connector includes a plurality of switches corresponding to the plurality of batteries, respectively.

3. The battery control device according to claim 1, wherein the controller is configured to discharge each of the plurality of batteries at a first current rate during the first discharge period, and discharge a battery connected to the output terminal among the plurality of batteries at a second current rate higher than the first current rate during the second discharge period.

4. The battery control device according to claim 1, wherein the controller is configured to switch batteries disconnected from the output terminal among the plurality of batteries to enter an idle state, during the second discharge period.

5. The battery control device according to claim 1, wherein the controller is configured such that during the second discharge period, when a connection time of a first battery connected to the output terminal exceeds a predetermined reference time, a second battery selected from remaining batteries other than the first battery among the plurality of batteries is connected to the output terminal, and the connection of the first battery is turned OFF.

6. The battery control device according to claim 5, wherein the second battery is a battery with a highest voltage among the remaining batteries.

7. The battery control device according to claim 5, wherein the second battery is a battery that has been disconnected from the output terminal for a longest time period among the remaining batteries.

8. The battery control device according to claim 1, wherein the controller includes:
a data acquisition module configured to acquire data on electrical characteristic values of the plurality of batteries using at least one electric sensor;
a SOC information generation module configured to generate SOC information indicating a SOC value of each of the plurality of batteries using the data; and
a connection control module configured to control the connector according to SOC values of the plurality of batteries indicated in the SOC information.

9. The battery control device according to claim 1, wherein the plurality of batteries include at least one lithium-sulfur battery.

10. A battery system including the battery control device according to any one of claims 1 to 9.

11. A transportation vehicle including the battery control device according to any one of claims 1 to 9.

12. A battery control method for controlling a discharge of a plurality of batteries, the battery control method comprising:
a first discharge step in which the plurality of batteries are connected in parallel with each other to an output terminal and discharged during a first discharge period from a start time of discharge of the plurality of batteries each of which SOC is equal to or more than a predetermined reference value until a time when the SOC of at least one of the plurality of batteries reaches the reference value; and
a second discharge step in which the plurality of batteries are connected alternatively to the output terminal and discharged during a second discharge period from a time when the SOC of each of the plurality of batteries becomes lower than the reference value until a time when the discharge of the plurality of batteries is terminated.

13. The battery control method according to claim 12, wherein in the first discharge step, each of the plurality of batteries is discharged at a first current rate, and
in the second discharge step, a battery connected to the output terminal among the plurality of batteries is discharged at a second current rate higher than the first current rate during the second discharge period.

14. The battery control method according to claim 12, wherein in the second discharge step, batteries disconnected from the output terminal among the plurality of batteries are switched to enter an idle state.

15. The battery control method according to claim 12, wherein in the second discharge step, when a connection time of a first battery connected to the output terminal exceeds a predetermined reference time, a second battery selected from remaining batteries other than the first battery among the plurality of batteries is connected to the output terminal, and the connection of the first battery is turned OFF.
